# DEMANDE DE BREVET EUROPEEN

(11) **EP 2 533 165 A1**
(43) Date de publication de la demande: **12.12.2012**
(21) Numéro de dépôt: 12170818.4
(22) Date de dépôt: 05.06.2012
(51) Int. Cl.: G06F 17/30

(54) **Procédé d'affichage d'une image élémentaire d'une image composée et dispositif de visualisation associé**

(30) Priorité: 06.06.2011 FR 1154897
(71) Demandeur: Myriad France, 73370 Le Bourget-du-lac (FR)
(72) Inventeur: Coupvent des Graviers, Marc-Emmanuel, 75017 PARIS (FR)
(74) Mandataire: Domenego, Bertrand

(57) **Abrégé**

Ce procédé d'affichage d'une image élémentaire d'une image composée regroupant plusieurs images élémentaires sur un dispositif de visualisation à mémoire, propre à allouer une zone de mémoire globale pour le traitement d'images, comprend :
- une étape de sauvegarde de l'image composée, et
- une étape de décodage et d'affichage sur le dispositif de visualisation des images élémentaires issues de l'image composée.

Il comporte, en outre une étape de transcodage, destinée à une recompression de l'image composée, comportant :
- une étape de partition de l'image composée en un nombre de parties, et successivement pour chaque partie de l'image composée :
- une étape de décodage de la seule partie de l'image composée, et
- une étape de recompression de la partie décodée de l'image composée.

L'étape de décodage et d'affichage est réalisée à partir de l'image composée recompressée.

## Description

La présente invention concerne un procédé d'affichage d'une image élémentaire d'une image composée regroupant plusieurs images élémentaires, sur un dispositif de visualisation à mémoire propre à allouer une zone de mémoire globale pour le traitement d'images, l'image composée, ayant un format initial de compression et une taille initiale donnée, le procédé comprenant :
- une étape de sauvegarde de l'image composée, dans la zone de mémoire globale allouée pour le traitement d'images du dispositif de visualisation, et
- une étape de décodage et d'affichage sur le dispositif de visualisation des images élémentaires issues de l'image composée.

La présente invention concerne également un dispositif de visualisation à mémoire propre à l'affichage d'une image élémentaire d'une image composée regroupant plusieurs images élémentaires, l'image composée ayant un format initial de compression et une taille initiale donnée, le dispositif, propre à allouer une zone de mémoire globale pour le traitement d'images, comprenant :
- des moyens de sauvegarde de l'image composée, dans la zone de mémoire globale allouée pour le traitement d'images du dispositif de visualisation, et
- des moyens de décodage et d'affichage, destinés à l'affichage sur le dispositif de visualisation des images élémentaires issues de l'image composée.

On connaît un procédé d'affichage d'une page Web, comportant des images élémentaires, sur un dispositif de visualisation du type précité.

Ce procédé consiste à envoyer une requête à un serveur Web, hébergeant la page Web, afin de télécharger une image composée, plus connue sous l'appellation « Sprite CSS », de l'anglais Sprite Cascading Style Sheets, sur le dispositif de visualisation. Cette image est préalablement composée grâce à une technique connue, utilisée par les développeurs de sites Web, qui consiste à regrouper toutes les images élémentaires, c'est-à-dire tous les icones et éléments graphiques, de la page Web dans une seule grande image composée, qui est alors compressée au format GIF, acronyme de Graphics Interchange Format, ou PNG, acronyme de Portable Network Graphics.

Une fois que l'image composée est téléchargée en mémoire du dispositif de visualisation, cette image est décodée pour permettre à la page Web d'utiliser les images élémentaires, grâce aux coordonnées de chaque image élémentaire dans l'image composée, afin de réaliser un affichage complet de la page Web sur le dispositif de visualisation.

Ainsi, cette technique permet de récupérer toutes les images élémentaires d'une page donnée à travers une seule requête au serveur. Par conséquent, le temps de chargement de la page Web sur le dispositif de visualisation est optimisé puisque le nombre de requêtes au serveur est réduit.

Le problème est que, après décodage, la taille de l'image composée prend une place importante en mémoire du dispositif de visualisation. Dans le cas d'une image composée présentant des images élémentaires de taille fixe ou un encodage de pixels indépendant de pixels précédents, une solution consiste à ne décoder que la portion de l'image composée comprenant l'image élémentaire à afficher.

Toutefois, dans le cas d'une image composée comprenant des images élémentaires sans taille fixe, utilisées comme fonds d'éléments HTML, selon la terminologie anglo-saxonne HyperText Markup Language, comme par exemple un champ texte, les images élémentaires sont séparées par des grandes zones de pixels blancs ou vides, afin d'éviter l'affichage de plusieurs images élémentaires quand la taille de l'élément HTML est plus grand que l'espace allouée à l'image élémentaire à afficher. Ainsi, après décodage, la portion de l'image composée comprenant le champ texte augmente fortement dans ce cas, occupant alors une zone importante de la mémoire du dispositif de visualisation.

De plus, dans le cas d'une image composée utilisant un format de compression, par exemple PNG, ayant la propriété d'encoder un pixel donné à partir de pixels précédents, il n'est pas possible de décoder une portion de l'image composée sans devoir décoder l'image composée dans son entier. Ainsi, dans ce cas également, la zone occupée en mémoire est importante.

Dans le cas de dispositifs de visualisation à mémoire limitée, comme par exemple un téléphone mobile, ce problème est susceptible d'entrainer un dépassement de la mémoire allouée au traitement d'images, voire de la mémoire totale du mobile, entrainant au minimum le non-affichage complet de la page Web, voire un disfonctionnement plus conséquent du dispositif de visualisation, comme par exemple un redémarrage du dispositif de visualisation.

Le but de l'invention est donc de proposer un procédé d'affichage de pages Web permettant d'optimiser l'espace occupée, dans la mémoire du dispositif de visualisation, par l'image composée ou la partie de l'image composée, après décodage, de manière à améliorer l'affichage de pages Web comprenant de nombreuses images élémentaires.

A cet effet, l'invention a pour objet un procédé d'affichage du type précité, **caractérisé en ce qu'**il comporte, en outre une étape de transcodage, destinée à une recompression de l'image composée, suivant un algorithme de compression, en un format final de compression et en une taille finale différents du format initial de compression et de la taille initiale, l'étape de transcodage comportant :
- une étape de partition de l'image composée en un nombre de parties, et successivement pour chaque partie de l'image composée :
- une étape de décodage de la seule partie de l'image composée dans une zone de mémoire de décodage, au sein de la zone de mémoire globale allouée au traitement d'images du dispositif de visualisation, et
- une étape de recompression de la partie décodée de l'image composée en un format final de compression au sein d'une zone de mémoire allouée au traitement de l'image composée au format final de compression,
et en ce que l'étape de décodage et d'affichage est réalisée à partir de l'image composée recompressée.

Suivant d'autres modes de réalisation, le procédé d'affichage comprend une ou plusieurs des caractéristiques suivantes, prises isolément ou suivant toutes les combinaisons techniquement possibles :
- l'étape de transcodage comporte, en outre, successivement pour chaque partie de l'image composée, une étape de libération de la zone de mémoire de décodage, au sein de la zone de mémoire globale allouée au traitement d'images du dispositif de visualisation ;
- l'étape de partition de l'image composée est propre à définir chaque partie de l'image composée en un nombre de lignes de pixels ;
- l'étape de recompression comporte une étape d'ajout d'une table d'index, destinée à déterminer la position des images élémentaires de l'image composée au format final de compression dans la zone de mémoire globale allouée au traitement d'images ;
- il comporte, en outre, une étape de comparaison entre la taille de l'image composée au format initial de compression et une taille initiale prédéfinie, destinée à initier l'étape de transcodage ;
- il comporte, en outre, une étape de comparaison entre la taille finale de l'ensemble des parties recompressées de l'image composée et une taille finale prédéfinie (84), destinée à arrêter l'étape de transcodage ;
- le format initial de compression de l'image composée est un élément du groupe consistant en : GIF, et PNG ;
- le dispositif de visualisation est un téléphone mobile.

L'invention a également pour objet un dispositif d'affichage du type précité, **caractérisé en ce qu'**il comporte, en outre, des moyens de transcodage, destinés à une recompression de l'image composée, suivant un algorithme de compression, en un format final de compression et en une taille finale différents du format initial de compression et de la taille initiale, les moyens de transcodage comportant :
- des moyens de partition de l'image composée en un nombre de parties, et successivement pour chaque partie de l'image composée :
- des moyens de décodage de la seule partie de l'image composée dans une zone de mémoire de décodage, au sein de la zone de mémoire globale allouée au traitement d'images du dispositif de visualisation, et
- des moyens de recompression de la partie décodée de l'image composée en un format final de compression au sein d'une zone de mémoire allouée au traitement de l'image composée au format final de compression,
et en ce que les moyens de décodage et d'affichage sont appliqués à l'image composée recompressée.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un système global illustrant la mise en oeuvre d'un dispositif de visualisation selon l'invention,
- la figure 2 est une représentation schématique d'une image composée,
- la figure 3 est un organigramme du procédé d'affichage selon l'invention, et
- la figure 4 est une représentation schématique d'un exemple de transcodage réalisé dans la mémoire d'un dispositif de visualisation selon l'invention.

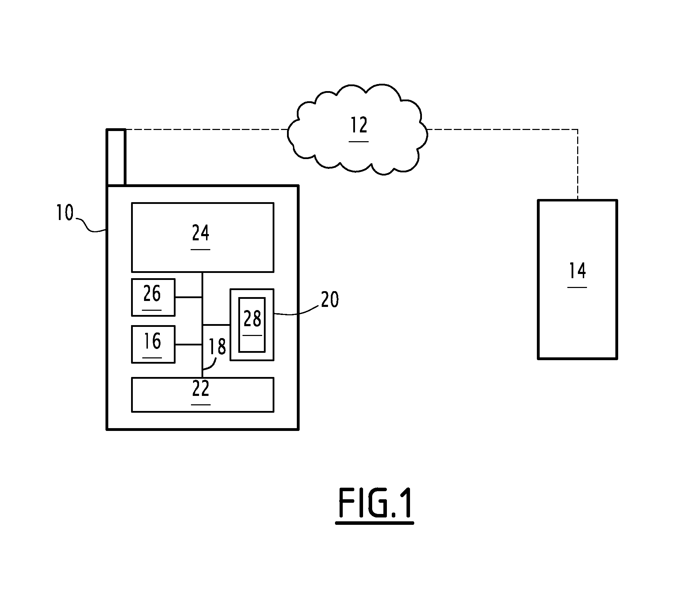

On observe, en figure 1, un système global comprenant un dispositif de visualisation 10 selon l'invention, comme par exemple un téléphone portable, propre à interagir avec un réseau 12 de téléphonie mobile afin d'établir une communication avec un dispositif électronique distant 14, tel un serveur par exemple, dans le but d'échanger des données.

Plus précisément, le dispositif de visualisation 10 comprend différents composants électroniques nécessaires à son fonctionnement, comme par exemple une unité centrale de traitement 16, relié à un bus de données 18, permettant l'échange d'informations avec l'ensemble des autres composants du dispositif de visualisation 10, comme une ou plusieurs mémoires 20, une interface utilisateur 22 et un écran d'affichage 24.

Le dispositif de visualisation 10 comprend également des moyens de communication 26 permettant l'échange des données avec le réseau 12 de téléphonie mobile. Les différents composants sont interconnectés entre eux grâce au bus de données 18.

L'unité centrale 16 est propre à exécuter des applications contenues en mémoire 20, notamment un système d'exploitation permettant le fonctionnement classique d'un dispositif de visualisation 10.

La mémoire 20 comporte différentes zones de mémoire, allouées statiquement ou dynamiquement, en fonction des applications exécutées. Par exemple, dans le cas d'applications demandant un affichage et/ou une manipulation d'images, une zone de mémoire globale est allouée pour le traitement d'images.

La mémoire 20 comprend également une application de type navigateur Web 28 connue, propre à être exécutée par l'unité centrale de traitement 16, pour permettre d'accéder au dispositif électronique distant 14, comme un serveur appartenant à un réseau distant, tel le réseau internet par exemple.

Le serveur est propre à héberger un ensemble d'informations comme, par exemple, des pages Web dans le cas d'un serveur Web. Ces pages Web comprennent généralement des images élémentaires, ces images élémentaires étant regroupées dans une image composée, stockée sur le serveur.

L'interface utilisateur 22 permet à un utilisateur d'interagir avec le navigateur Web 28 lorsque celui-ci est exécuté par l'unité centrale 16.

L'écran d'affichage 24 est propre à fournir, à l'utilisateur, une visualisation de différentes informations issues des applications exécutées par l'unité centrale 16, comme par exemple une page Web fournie par le navigateur Web.

De manière avantageuse, l'écran et l'interface utilisateur se présentent sous une forme commune, dans le cas d'un écran tactile par exemple.

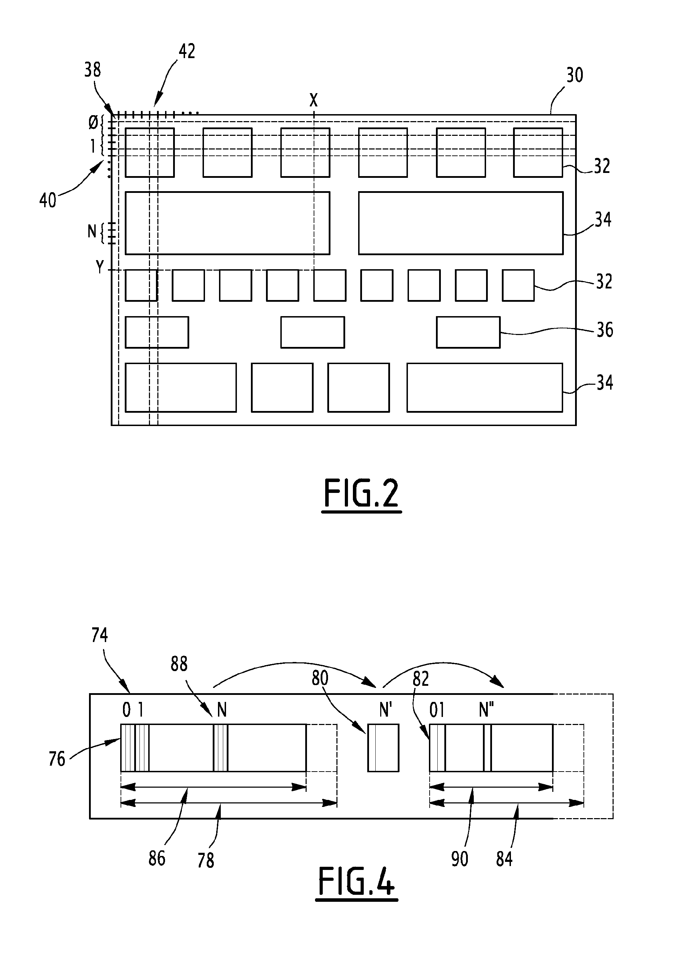

La figure 2 représente une image composée 30 qui comprend différentes images élémentaires, comme par exemple des icones 32, des images photographiques 34 ou des champs texte 36.

Chaque image élémentaire est repérée par des coordonnées (X, Y), destinées à la page Web pour afficher correctement chaque image élémentaire.

L'image composée 30 est constituée d'un ensemble de points ou pixels 38 contenu dans un tableau à deux dimensions comprenant des lignes 40 et des colonnes 42. On appelle définition le nombre de pixels constituant l'image, c'est-à-dire le nombre de colonnes que multiplie le nombre de lignes. Ainsi, une image possédant 640 pixels en largeur et 480 en hauteur a une définition notée 640x480.

Le fichier contenant l'image 30 est constitué d'un ensemble de valeurs représentant la couleur ou l'intensité de chaque pixel, un codage étant utilisé afin de coder la valeur sur un certain nombre de bits, ou poids du pixel, afin de déterminer la couleur ou l'intensité du pixel.

Pour connaître la taille, ou poids de l'image, il est nécessaire de compter le nombre de pixels que contient l'image puis de multiplier ce chiffre par le poids de chaque pixel. Par exemple, une image 640x480, avec un codage de chaque pixel sur 24 bits, a une taille, ou poids de 900 Ko.

Compte-tenu du caractère volumineux de ce type de fichier, une technique de compression, par exemple GIF ou PNG, est utilisée pour le stockage des images dans le serveur 14, ce qui permet d'obtenir une taille réduite du fichier.

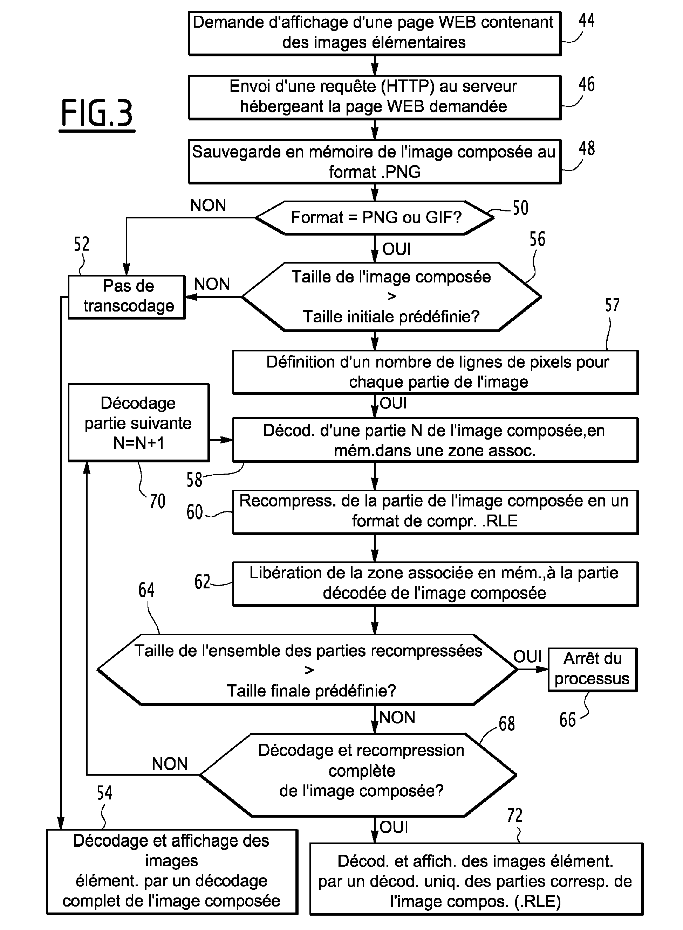

Maintenant, le procédé d'affichage d'une page web sur le dispositif de visualisation 10 va être à présent décrit, conformément à la figure 3.

Lors d'une étape 44, au moyen du navigateur Web 28, l'utilisateur effectue une demande d'affichage d'une page Web comprenant des images élémentaires 32, 34, 36, par exemple des icones ou éléments graphiques, au travers de l'interface utilisateur 22.

La demande d'affichage est traitée par l'unité centrale de traitement 16 et une requête, par exemple une requête http, acronyme de HyperText Transfer Protocol, est envoyée par les moyens de communication 26, à travers le réseau de téléphonie mobile 12, au dispositif électronique distant 14 hébergeant la page Web demandée, par exemple un serveur Web, comme illustrée par l'étape 46.

Sur réception de cette requête, le serveur Web envoie les informations associées à la page Web demandée, comme par exemple des éléments textuels ou des éléments graphiques. Plus particulièrement, les éléments graphiques, ou images élémentaires 32, 34, 36, sont envoyés au travers d'un seul fichier graphique comprenant une image composée de l'ensemble des images élémentaires 32, 34, 36 de la page Web demandée.

Ainsi, l'image composée 30 est transmise par le serveur 14 au dispositif de visualisation 10, sous une forme compressée, à l'issue de l'étape 46.

Lors d'une étape 48, après réception, l'image composée 30 est sauvegardée dans la mémoire 20 du dispositif de visualisation 10 à un format initial de compression. Plus particulièrement, l'image composée 30, au format GIF par exemple, est sauvegardée dans la zone de mémoire globale pour le traitement d'images du dispositif de visualisation 10.

Avantageusement, comme les images composées sont généralement de type GIF ou PNG, un test du format initial de compression est effectué, lors d'une étape 50, pour vérifier que le format de l'image composée est de type GIF ou PNG avant de passer à une étape suivante.

Lorsque l'image 30 est d'un type différent, par exemple JPEG, aucun traitement supplémentaire, selon l'invention, n'est réalisé lors d'une étape 52 et le contenu de l'image composée 30 est affiché, après un décodage complet de l'image composée 30, réalisé de façon connue en soi lors d'une étape 54.

Si l'image composée 30 est au format GIF ou PNG, de manière préférée, l'étape suivante correspond à une étape 56 de comparaison entre la taille de l'image composée, et une taille initiale prédéfinie.

Lorsque la taille de l'image composée 30 est inférieure à une taille initiale prédéfinie, correspondant par exemple à la taille d'une zone de mémoire allouée au traitement d'une image, aucun traitement supplémentaire, selon l'invention, n'est réalisé à l'étape 52 et, comme expliqué précédemment, le contenu de l'image composée est affiché, après un décodage complet lors de l'étape 54.

Dans le cas contraire, lorsque la taille de l'image composée 30 est supérieure à la taille initiale prédéfinie, un transcodage de l'image composée 30 est initié afin de réaliser une conversion du format initial de compression en un format final de compression, destiné à réduire la taille de l'image composée 30.

Lors d'une étape 57, l'image composée 30 est divisé en un ensemble de blocs ou de parties, chaque partie 88 de l'image composée 30 comprenant, par exemple, un nombre défini de lignes 40 de pixels.

Lors d'une étape 58, un décodage d'une partie N de l'image composée 30, par exemple un bloc N de trois lignes de pixels comme représenté sur la figure 2, est réalisé au sein d'une zone de mémoire de décodage de la mémoire 20.

Ensuite, lors d'une étape 60, la partie décodée de l'image composée est recompressée en un format final de compression, suivant un algorithme de compression.

Par exemple, l'algorithme de compression est un algorithme RLE, de l'acronyme Run Lenght Encoding, qui consiste à repérer et à éliminer la répétition de données successives.

Avantageusement, une table d'index est ajoutée pendant la recompression, propre à une détermination ultérieure de la position en mémoire 20 des images élémentaires 32, 34, 36 en fonction du numéro de ligne 40 de l'image composée 30.

Lors d'une étape 62, la zone de mémoire de décodage, utilisée à l'étape 58 pour le décodage de la partie N de l'image composée 30, est libérée, afin de pouvoir être réutilisée.

De manière préférée, lors d'une étape 64, une comparaison est effectuée entre la taille de l'ensemble des parties recompressées de l'image composée 30 au format final de compression, et une taille finale prédéfinie, correspondant par exemple à la taille d'une zone de mémoire allouée au traitement d'une image, afin d'éviter un débordement de mémoire 20.

Lorsque la taille de l'ensemble des parties recompressées de l'image composée 30 est supérieure à la taille finale prédéfinie, le procédé est interrompu à l'étape 66 et les images élémentaires associées à la page Web ne sont pas affichées.

Dans le cas contraire, comme indiqué à l'étape 68, un test est effectué pour savoir si l'image composée 30 est décodée et recompressée dans son intégralité.

Si ce n'est pas le cas, le procédé passe au traitement d'une autre partie de l'image composée 30, lors d'une étape 70 puis le procédé continue à l'étape 58 par le décodage de cette partie non décodée de l'image composée, par exemple d'une partie N+1 de l'image composée 30.

Une fois que l'image composée 30 est décodée et recompressée entièrement au format final de compression RLE, l'affichage des images élémentaires 32, 34, 36 de la page Web est effectué après un décodage, lors de l'étape 72, uniquement des parties correspondantes de l'image composée 30 en utilisant la table d'index préalablement ajoutée.

Les étapes de décodage 58, et de recompression 60 de la partie de l'image composée au format RLE, vont être à présent décrites de manière détaillée.

La figure 4 illustre un exemple de transcodage d'un bloc N au format initial de compression de l'image composée 30, représentée sur la figure 1, en un bloc N" en un format final de compression, au sein d'une zone de mémoire globale 74 allouée au traitement d'images dans la mémoire 20 du dispositif de visualisation 10.

La zone de mémoire globale 74 allouée au traitement d'images comprend différentes zones de mémoire destinées au traitement d'images avant leur affichage sur l'écran 24 du dispositif de visualisation 10. Plus particulièrement, la zone de mémoire globale 74 comprend une zone de mémoire 76 allouée au traitement d'une image composée 30 au format initial de compression, de taille prédéfinie 78, une zone de mémoire de décodage 80 propre au décodage d'un bloc N de l'image composée 30 et une zone de mémoire 82 de taille prédéfinie 84, allouée au traitement d'une image composée 30 au format final de compression.

Ainsi, au début de l'étape 58, à partir de l'image composée 30 de taille initiale 86, sauvegardée dans la zone de mémoire 76 allouée au traitement d'une image composée 30 au format initial de compression, l'unité centrale 16 traite une partie de l'image composée 30, par exemple un bloc N 88 de trois lignes de pixels, permettant de retrouver les données de l'image composée 30 avant codage au format initial de compression. Chaque ligne de pixel du bloc N est décodée, dans la zone de mémoire de décodage 80, un décodeur spécifique du format initial de compression étant utilisé pour réaliser cette opération. Par exemple, dans le cas d'une image au format initial de compression GIF, un décodeur GIF est utilisé.

Après décodage, le bloc N est converti en un bloc N'.

Ensuite, une recompression du bloc N' en un bloc N" est effectuée, correspondant à l'étape 60, suivant un algorithme de compression. Dans le cas d'un algorithme RLE, le bloc N" est appelé bloc RLE, et l'ensemble des blocs RLE associé à l'image composée 30 au format final de compression correspond à un fichier RLE.

Plus précisément, l'algorithme RLE consiste à remplacer dans un ensemble d'éléments, une séquence de n « éléments V » identiques par un couple (n, V), le premier octet indiquant le nombre de caractères identiques à compresser, et le second le caractère à compresser. A titre d'exemple, la chaîne « 0A 0A 0A 0A 0A 0A » est compressée sous la forme « 6A ».

Lors de la recompression, de manière préférée, une table d'index est ajoutée, propre à la détermination ultérieure de la position des images élémentaires 32, 34, 36 dans l'image composée 30.

La table d'index est construite pendant que le procédé décrit par la figure 3 est exécuté. Chaque élément de cette table, appelé index, est un couple (D, R).

D, correspondant à un décalage, pointe vers un bloc RLE dans le fichier RLE de l'image composée 30, un bloc RLE correspondant à une unité de compression RLE, soit « 6A » dans l'exemple indiqué ci-dessus. A titre d'exemple, un index est ajouté tous les 10 blocs RLE.

R, ou rang du pixel, est égal à *x* + *y* * n, où (x, y) sont les coordonnées dans l'image composée 30, du premier pixel encodé par le bloc RLE pointé par D, et n le nombre de pixels par ligne 40 de l'image composée 30. Avantageusement, la table d'index est triée dans l'ordre croissant de R.

A l'issue de l'étape 60 de recompression, le bloc N' est converti en bloc N", ou bloc RLE dans l'exemple considéré.

Après un transcodage complet de l'image composée 30, l'ensemble des blocs de l'image composée occupe une taille finale 90 de la zone de mémoire 82 allouée au traitement d'une image composée au format final de compression, cette taille finale 90 étant inférieure à la taille initiale 86.

Lors de l'affichage d'une page web comportant une image composée 30 de type « Sprite CSS », le code HTML de la page web accède aux images élémentaires 32, 34, 36 de l'image composée 30 en utilisant les coordonnées (x, y) du pixel situé sur le coin en haut à gauche de ces images élémentaires 32, 34, 36 ainsi que leur largeur et hauteur.

Ces coordonnées (x, y) sont transformées en rang du pixel R_{S} en utilisant la formule ci-dessus. La table d'index est parcourue jusqu'à ce que l'on trouve un index I_{T} tel que I_{T}=(D_{T},R_{T}) pour lequel R_{T} est inférieur ou égal à R_{S}. Le décalage D_{T} est ensuite utilisé pour accéder au bloc RLE correspondant et enfin une progression d'un nombre de positions égal à (R_{S} - R_{T}) dans le(s) bloc(s) RLE suivant(s) est effectuée pour accéder à la valeur du pixel en haut à gauche de l'image élémentaire 32, 34, 36 recherchée. Les autres pixels de l'image élémentaire 32, 34, 36 étant retrouvés en progressant dans les blocs RLE suivants.

Dés lors, le dispositif 10, en utilisant le procédé suivant l'invention, est propre à afficher une image élémentaire d'une page Web en décodant uniquement une partie de l'image composée, permettant ainsi de diminuer l'espace occupée en mémoire pour le décodage.

Ainsi, l'invention permet d'afficher correctement des pages Web utilisant la technique du CSS Sprite, notamment sur des dispositifs de visualisation à mémoire limitée.

## Revendications

1. Procédé d'affichage d'une image élémentaire d'une image composée regroupant plusieurs images élémentaires (32, 34, 36), sur un dispositif de visualisation (10) à mémoire (20) propre à allouer une zone de mémoire globale (74) pour le traitement d'images, l'image composée (30), ayant un format initial de compression et une taille initiale (86) donnée, le procédé comprenant :
- une étape (48) de sauvegarde de l'image composée (30), dans la zone de mémoire globale (74) allouée pour le traitement d'images du dispositif de visualisation (10), et
- une étape de décodage et d'affichage (72) sur le dispositif de visualisation (10) des images élémentaires (32, 34, 36) issues de l'image composée (30),
**caractérisé en ce qu'**il comporte, en outre une étape de transcodage, destinée à une recompression de l'image composée (30), suivant un algorithme de compression, en un format final de compression et en une taille finale (90) différents du format initial de compression et de la taille initiale (86), l'étape de transcodage comportant :
- une étape (57) de partition de l'image composée (30) en un nombre de parties (88), et successivement pour chaque partie (88) de l'image composée (30) :
- une étape (58) de décodage de la seule partie (88) de l'image composée (30) dans une zone de mémoire de décodage (80), au sein de la zone de mémoire globale (74) allouée au traitement d'images du dispositif de visualisation (10), et
- une étape (60) de recompression de la partie décodée de l'image composée (30) en un format final de compression au sein d'une zone de mémoire (82) allouée au traitement de l'image composée (30) au format final de compression,
et **en ce que** l'étape de décodage et d'affichage (72) est réalisée à partir de l'image composée (30) recompressée.

2. Procédé d'affichage selon la revendication 1, **caractérisé en ce que** l'étape de transcodage comporte, en outre, successivement pour chaque partie (88) de l'image composée (30), une étape (62) de libération de la zone de mémoire de décodage (80), au sein de la zone de mémoire globale (74) allouée au traitement d'images du dispositif de visualisation (10).

3. Procédé d'affichage selon l'une quelconque des revendications précédentes, **caractérisé en ce que** l'étape (57) de partition de l'image composée (30) est propre à définir chaque partie (88) de l'image composée (30) en un nombre de lignes (40) de pixels.

4. Procédé d'affichage selon l'une quelconque des revendications précédentes, **caractérisé en ce que** l'étape (60) de recompression comporte une étape d'ajout d'une table d'index, destinée à déterminer la position des images élémentaires (32, 34, 36) de l'image composée (30) au format final de compression dans la zone de mémoire globale (74) allouée au traitement d'images.

5. Procédé d'affichage selon l'une quelconque des revendications précédentes, **caractérisé en ce qu'**il comporte, en outre, une étape (56) de comparaison entre la taille (86) de l'image composée (30) au format initial de compression et une taille initiale prédéfinie (78), destinée à initier l'étape de transcodage.

6. Procédé d'affichage selon l'une quelconque des revendications précédentes, **caractérisé en ce qu'**il comporte, en outre, une étape (64) de comparaison entre la taille finale (90) de l'ensemble des parties recompressées de l'image composée (30) et une taille finale prédéfinie (84), destinée à arrêter l'étape de transcodage.

7. Procédé d'affichage selon l'une quelconque des revendications précédentes, **caractérisé en ce que** le format initial de compression de l'image composée (30) est un élément du groupe consistant en : GIF, et PNG.

8. Procédé d'affichage selon l'une quelconque des revendications précédentes, **caractérisé en ce que** le dispositif de visualisation (10) est un téléphone mobile.

9. Dispositif de visualisation (10) à mémoire (20), propre à l'affichage d'une image élémentaire d'une image composée regroupant plusieurs images élémentaires (32, 34, 36), l'image composée (30) ayant un format initial de compression et une taille initiale (86) donnée, le dispositif (10), propre à allouer une zone de mémoire (74) globale pour le traitement d'images, comprenant :
- des moyens de sauvegarde (20) de l'image composée (30), dans la zone de mémoire globale (74) allouée pour le traitement d'images du dispositif (10) de visualisation, et
- des moyens de décodage et d'affichage, destinés à l'affichage sur le dispositif de visualisation (10) des images élémentaires (32, 34, 36) issues de l'image composée (30),
**caractérisé en ce qu'**il comporte, en outre, des moyens de transcodage, destinés à une recompression de l'image composée (30), suivant un algorithme de compression, en un format final de compression et en une taille finale (90) différents du format initial de compression et de la taille initiale (86), les moyens de transcodage comportant :
- des moyens de partition de l'image composée (30) en un nombre de parties (88), et successivement pour chaque partie (88) de l'image composée (30) :
- des moyens de décodage de la seule partie (88) de l'image composée (30) dans une zone de mémoire de décodage (80), au sein de la zone de mémoire globale (74) allouée au traitement d'images du dispositif de visualisation (10), et
- des moyens de recompression de la partie décodée de l'image composée (30) en un format final de compression au sein d'une zone de mémoire (82) allouée au traitement de l'image composée (30) au format final de compression,
et **en ce que** les moyens de décodage et d'affichage sont appliqués à l'image composée (30) recompressée.
